# EUROPEAN PATENT APPLICATION

(11) **EP 3 678 398 A1**
(43) Date of publication of application: **08.07.2020**
(21) Application number: 17927186.1
(22) Date of filing: 29.09.2017
(51) Int. Cl.: H04W 16/18

(54) **ACCESS POINT DEVICE AND COMMUNICATION METHOD**

(71) Applicant: Huawei Technologies Co., Ltd., Longgang District Shenzhen, Guangdong 518129 (CN)
(72) Inventor: WANG, Mingyue, Shenzhen Guangdong 518129 (CN); LIU, Sheng, Shenzhen Guangdong 518129 (CN)
(74) Representative: Gill Jennings & Every LLP
(86) International application number: PCT/CN2017/104386
(87) International publication number: WO 2019/061294

(57) **Abstract**

An access point device and a communication method are provided. The access point device includes an access point device body and a plurality of remote antennas located outside the access point device body, a distance between each remote antenna and the access point device body is greater than a preset distance, the access point device body includes a transceiver and a processor, the processor is connected to the transceiver, the transceiver is connected to the plurality of remote antennas by using radio frequency feed lines, and the plurality of remote antennas are narrow beam low side-lobe antennas. The processor is configured to select at least one target antenna from the plurality of remote antennas. The transceiver is configured to use the at least one target antenna for communication. According to the device and the method that are provided in this disclosure, adjacent access point devices can be prevented from causing co-channel interference to each other, thereby improving communication quality.

## Description

### TECHNICAL FIELD

This disclosure relates to the field of wireless communications, and in particular, to an access point device and a communication method.

### BACKGROUND

A wireless local area network (English: wireless local area network, WLAN) system usually includes a plurality of access point devices. Each access point device covers a particular range, and provides a wireless access service for a terminal within the range. Adjacent access point devices in the WLAN usually use different operating channels (English: operating channel). However, in an existing wireless local area network, a quantity of available channels is limited, and adjacent access point devices may use a same operating channel. Adjacent access point devices using a same operating channel cause co-channel interference to each other, affecting communication quality.

### SUMMARY

This disclosure provides an access point device and a communication method, to resolve a problem that poor communication quality is caused by co-channel interference. The technical solutions are as follows:
According to a first aspect, this disclosure provides an access point device. The access point device includes an access point device body and a plurality of remote antennas located outside the access point device body, a distance between each remote antenna and the access point device body is greater than a preset distance, the access point device body includes a transceiver and a processor, the processor is connected to the transceiver, the transceiver is connected to the plurality of remote antennas by using radio frequency feed lines, and the plurality of remote antennas are narrow beam low side-lobe antennas. The processor is configured to select at least one target antenna from the plurality of remote antennas. The transceiver is configured to use the at least one target antenna for communication.

In the access point device, the narrow beam low side-lobe antenna is used, and a distance between the narrow beam low side-lobe antenna and the access point device body is set to a particular distance. A narrower beam width of an antenna indicates stronger directivity of the antenna, and therefore indicates smaller interference to another co-channel device; and a lower strength of a side-lobe signal indicates a shorter transmission distance of the side-lobe signal, and therefore interference to another co-channel device is reduced, so that adjacent access point devices can be prevented from causing co-channel interference to each other, thereby improving communication quality.

The preset distance is at least 2.5 meters. For example, the preset distance may be 3 meters or longer.

In a possible design, all of the plurality of remote antennas include a same quantity of radiating elements, or at least two of the plurality of remote antennas include different quantities of radiating elements. A quantity of radiating elements may be specifically designed according to an actual requirement. Certainly, when working, the access point device may select one or more radiating elements of a specific remote antenna for communication depending on different communication requirements.

In a possible design, the transceiver is configured to use at least two target antennas to perform communication through multi-user multiple-input multiple-output (English: multi user-MIMO, MU-MIMO).

When two or more target antennas are selected for communication, due to a relatively long space distance between the target antennas, mutual interference between terminals that perform spatial multiplexing in the MU-MIMO manner is effectively reduced, helping improve a network capacity. When one target antenna is selected for communication, at least two radiating elements of the target antenna may be further selected to perform communication in the MU-MIMO manner, to improve a network capacity.

According to a second aspect, this disclosure further provides an access point device. The access point device includes an access point device body and at least one remote antenna located outside the access point device body, the access point device body includes an omnidirectional antenna, a transceiver, and a processor, the processor is connected to the transceiver, the transceiver is connected to the omnidirectional antenna and the at least one remote antenna by using radio frequency feed lines, a distance between each remote antenna and the access point device body is greater than a preset distance, and the at least one remote antenna is a narrow beam low side-lobe antenna. The transceiver is configured to use the omnidirectional antenna only to receive data. The processor is configured to select at least one target antenna from the at least one remote antenna. The transceiver is further configured to use the at least one target antenna for communication. Communication may be performed in an MU-MIMO manner regardless of whether one target antenna is selected or a plurality of target antennas are selected, to improve a network capacity.

In the access point device, the narrow beam low side-lobe antenna is used, and a distance between the narrow beam low side-lobe antenna and the access point device body is set to a particular distance. A narrower beam width of an antenna indicates stronger directivity of the antenna, and therefore indicates smaller interference to another co-channel device; and a lower strength of a side-lobe signal indicates a shorter transmission distance of the side-lobe signal, and therefore interference to another co-channel device is reduced, so that adjacent access point devices can be prevented from causing co-channel interference to each other, thereby improving communication quality. In addition, the omnidirectional antenna may be used during data receiving, so that communication reliability is improved, and this is applicable to an uplink transmission mode that is based on channel contention.

According to a third aspect, a communication method is provided. The method may be applied to the first aspect and any possible design provided in the first aspect. The method includes:
selecting, by an access point device, at least one target antenna from a plurality of remote antennas of the access point device, where there is a preset distance between each of the plurality of remote antennas and an access point device body of the access point device, and each remote antenna is a narrow beam low side-lobe antenna; and using, by the access point device, the at least one target antenna for communication.

In the communication method provided in this disclosure, the narrow beam low side-lobe antenna is used, and a distance between the narrow beam low side-lobe antenna and the access point device body is set to a particular distance. A narrower beam width of an antenna indicates stronger directivity of the antenna, and therefore indicates smaller interference to another co-channel device; and a lower strength of a side-lobe signal indicates a shorter transmission distance of the side-lobe signal, and therefore interference to another co-channel device is reduced, so that adjacent access point devices can be prevented from causing co-channel interference to each other, thereby improving communication quality.

In a possible design, the using, by the access point device, the at least one target antenna for communication includes: using, by the access point device, one target antenna to perform communication in a single user multiple-input multiple-output (English: single user-MIMO, SU-MIMO) manner or an MU-MIMO manner; or using, by the access point device, the at least two target antennas to perform communication in an MU-MIMO manner.

According to a fourth aspect, a communication method is provided. The method may be applied to the second aspect and any possible design provided in the second aspect. The method includes: using, by an access point device, an omnidirectional antenna of the access point device only to receive data, where an access point device body of the access point device includes the omnidirectional antenna, the access point device further includes a plurality of remote antennas that are connected to the access point device body by using radio frequency feed lines, a distance between each remote antenna and the access point device body is greater than a preset distance, and the at least one remote antenna is a narrow beam low side-lobe antenna; and
selecting, by the access point device, at least one target antenna from the at least one remote antenna, and using the at least one target antenna for communication.

In a possible design, the using the at least one target antenna for communication includes: using at least two target antennas to perform communication in an MU-MIMO manner. The MU-MIMO manner may be used regardless of whether one target antenna is used for communication or more than one target antenna is used for communication. When one target antenna is used for communication, communication may be performed in an SU-MIMO manner or the MU-MIMO manner based on a plurality of radiating elements included in the target antenna.

In the communication method provided in this disclosure, the narrow beam low side-lobe antenna is used, and a distance between the narrow beam low side-lobe antenna and the access point device body is set to a particular distance. A narrower beam width of an antenna indicates stronger directivity of the antenna, and therefore indicates smaller interference to another co-channel device; and a lower strength of a side-lobe signal indicates a shorter transmission distance of the side-lobe signal, and therefore interference to another co-channel device is reduced, so that adjacent access point devices can be prevented from causing co-channel interference to each other, thereby improving communication quality. In addition, the omnidirectional antenna may be used during data receiving, so that communication reliability is improved, and this is applicable to an uplink transmission mode that is based on channel contention.

### BRIEF DESCRIPTION OF DRAWINGS

FIG. 1 is a schematic structural diagram of a communications system according to an embodiment of the present invention;
FIG. 2 is a schematic structural diagram of an access point device according to an embodiment of the present invention;
FIG. 3 is a schematic structural diagram of an access point device according to an embodiment of the present invention;
FIG. 4 is a schematic structural diagram of an access point device according to an embodiment of the present invention;
FIG. 5 is a schematic diagram of signal coverage of an access point device according to an embodiment of the present invention;
FIG. 6 is a schematic diagram of signal coverage of an access point device according to an embodiment of the present invention;
FIG. 7 is a schematic diagram of signal coverage of an access point device according to an embodiment of the present invention;
FIG. 8 is a schematic diagram of signal coverage of an access point device according to an embodiment of the present invention; and
FIG. 9 is a schematic diagram of signal coverage of an access point device according to an embodiment of the present invention.

### DESCRIPTION OF EMBODIMENTS

To make the objectives, technical solutions, and advantages of this disclosure clearer, the following further describes in detail the implementations of this disclosure with reference to the accompanying drawings.

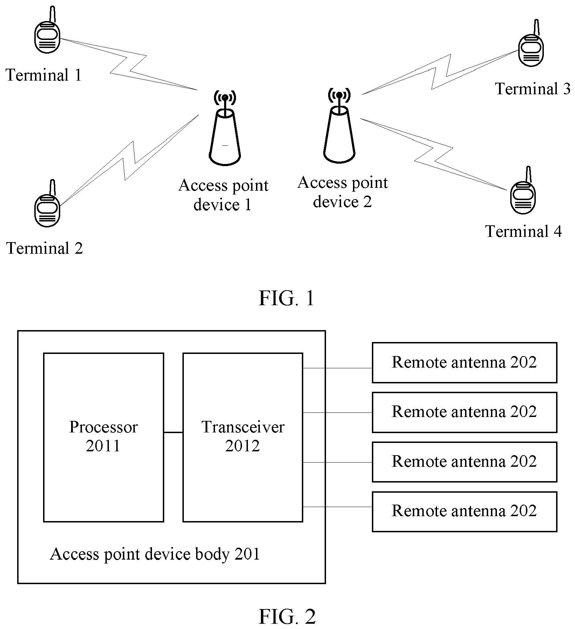

FIG. 1 is a schematic structural diagram of a communications system according to an embodiment of the present invention. Referring to FIG. 1, the communications system includes at least one access point device and at least one terminal. The access point device is associated with the terminal, and the access point device may provide a service for the terminal. The terminal may be a cellular phone, a smartphone, a personal digital assistant (PDA), a computer, a wearable device, or another WLAN wireless device.

An embodiment of the present invention provides an access point device, as shown in FIG. 2. The access point device includes an access point device body 201 and a plurality of remote antennas 202 located outside the access point device body. The access point device body includes an access point housing and a processor 2011 and a transceiver 2012 that are installed inside the access point housing. The processor 2011 is connected to the transceiver 2012. The transceiver 2012 is connected to the plurality of remote antennas 202 by using radio frequency feed lines (English: feed line). The plurality of remote antennas 202 are narrow beam (English: narrow beam) low side-lobe (English: low side-lobe) antennas. Each remote antenna includes at least one radiating element (English: radiating element). The processor and the transceiver may be components independent of each other, or may be an integrated component. This is not specifically limited in this embodiment of the present invention. A distance between each of the plurality of remote antennas and the access point device body may be at least 2.5 meters. For example, the distance may be 3 meters or longer.

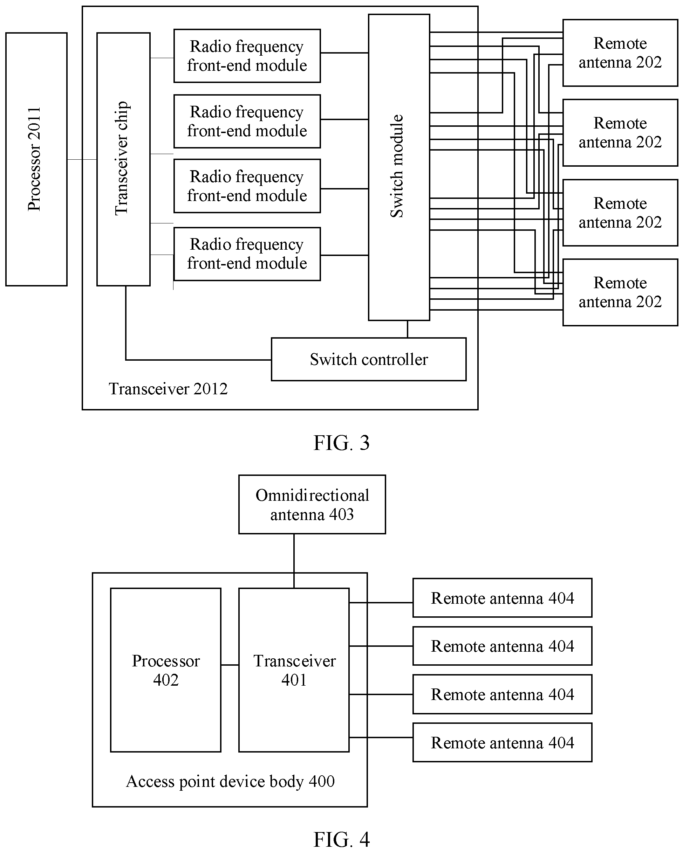

Referring to FIG. 3, the transceiver 2012 may include a transceiver chip, a switch controller, a plurality of radio frequency front-end modules, and a switch module. The plurality of radio frequency front-end modules are connected to the switch module. The switch module is connected to the plurality of remote antennas by using radio frequency feed lines. An input end of the transceiver chip is connected to the processor 2011, and the transceiver chip is connected to the switch controller, and is configured to output a signal to control output of the switch controller. The switch controller is connected to the switch module, and the switch controller is configured to control connection/disconnection between output ends of the switch module and the remote antennas based on selection of the processor. The switch module is open or closed based on the output of the switch controller, to enable the radio frequency front-end modules connected to the switch module to be connected to or disconnected from radiating elements of the remote antennas. For example, the switch module may be a switch module in which four switches are selected from 16 switches to be closed or a switch module of another model. FIG. 3 merely shows an example in which there are four remote antennas and each remote antenna has four radiating elements. Each output port of the switch module is connected to one radiating element of one remote antenna. The transceiver chip is connected to the plurality of radio frequency front-end modules, so that output of the processor may be converted into a radio frequency signal by using the transceiver chip, and then the radio frequency signal is output to the remote antennas by using the radio frequency front-end modules, for transmission. For the radio frequency front-end modules, when receiving the radio frequency signal output by the transceiver chip, the radio frequency front-end modules are in a data sending state, and when the radio frequency front-end modules receive a radio frequency signal from the remote antennas, the radio frequency front-end modules are in a data receiving state. The processor 2011 is configured to select at least one target antenna from the plurality of remote antennas 202, and the transceiver 2012 is configured to use the at least one target antenna for communication. For example, when the access point device receives, by using a specific remote antenna, a data transmission request sent by a terminal, the processor 2011 may calculate a receive signal strength indicator (English: receive signal strength indicator, RSSI) and a packet error ratio (English: packet error ratio, PER) based on the data transmission request, to determine a location of the terminal, and then a remote antenna closest to the terminal is connected to a radio frequency front-end module corresponding to the remote antenna. The transceiver 2012 communicates with the terminal by using a radiating element of the selected remote antenna.

The narrow beam low side-lobe antenna is an antenna with a relatively narrow beam width and a relatively low side-lobe signal strength. The beam width of the antenna is a width of the main lobe, and usually may be a half power beam width (English: half power beam width, HPBW). The half power beam width is also referred to as a main-lobe width or a 3 dB lobe width, and is an angle between two points when a field strength at an edge of the main lobe is reduced to a half of a maximum value. A narrower beam width of an antenna indicates stronger directivity of the antenna, and therefore indicates lower interference to another co-channel device. A lower strength of a side-lobe signal indicates a shorter transmission distance of the side-lobe signal, and therefore interference to another co-channel device is reduced.

Because the narrow beam low side-lobe antenna has small signal coverage, a plurality of remote antennas may be disposed in the access point device according to requirements for performance such as a signal strength or a coverage area, to expand signal coverage of a single access point device. When there are a relatively large quantity of terminals in coverage of the access point device and an MU-MIMO manner is used for communication, co-channel interference can be reduced, and further, an advantage of using the MU-MIMO manner can be exerted to a greater extent, thereby improving a network capacity of a WLAN.

In a possible implementation, all of the plurality of remote antennas 202 include a same quantity of radiating elements. In this case, all the remote antennas of the access point device have a same coverage capability.

In another possible implementation, different quantities of radiating elements may be installed in the plurality of remote antennas based on factors such as quantities of terminals, network use statuses, and data transmission speeds in different regions. At least two of the plurality of remote antennas 202 include different quantities of radiating elements. Different quantities of radiating elements may be installed in different antennas in the signal coverage of the access point device based on different population density or network use statuses of regions, so that different regions have different radio signal coverage statuses, and a radio resource is more appropriately allocated.

In a possible implementation, the processor 2011 is configured to select one target antenna from the plurality of remote antennas 202, and the transceiver 2012 is configured to use the target antenna for communication. For example, if the access point device has two remote antennas, and a terminal in coverage of only one remote antenna needs to perform communication at a specific moment, the processor selects the remote antenna as a target antenna, the transceiver communicates with the terminal by using the target antenna, and the other remote antenna is not used for data transmission. The communication may be performed in an SU-MIMO manner or the MU-MIMO manner. In another possible implementation, the processor 2011 is configured to select at least one target antenna from the plurality of remote antennas 202, and the transceiver 2012 is configured to use the at least one target antenna to perform communication in the MU-MIMO manner. Terminals in coverage of different remote antennas are relatively far away from each other in space. Therefore, when the terminals simultaneously perform communication at a same frequency, there is relatively small interference between signals of the terminals. When the processor 2011 selects at least two target antennas, the transceiver 2012 is configured to use the at least two target antennas to perform communication in the MU-MIMO manner. When the processor 2011 selects one target antenna, the transceiver 201 is configured to use some or all radiating elements included in the target antenna to perform communication in the MU-MIMO manner.

In this embodiment, the processor 2011 may determine a location of a terminal based on a data transmission request, and choose to use a target antenna closest to the terminal for data transmission. As the location of the terminal requesting data transmission changes or a terminal in another location emerges, the processor 2011 may use a different remote antenna for communication according to an actual communication requirement. Certainly, the processor 2011 may alternatively choose to use some or all radiating elements of a target antenna for communication according to an actual communication requirement.

An embodiment of this disclosure provides an access point device, as shown in FIG. 4. The access point device includes an access point device body and at least one remote antenna located outside the access point device body. The access point device body includes a transceiver 401, a processor 402, and an omnidirectional antenna (English: omnidirectional antenna) 403. The processor 402 is connected to the transceiver 401. The transceiver 401 is connected to the omnidirectional antenna 403 and the at least one remote antenna 404 by using radio frequency feed lines. A distance between each remote antenna 404 and the access point device body is greater than a preset distance. The at least one remote antenna 404 is a narrow beam low side-lobe antenna. Each remote antenna includes at least one radiating element, and the omnidirectional antenna includes at least one radiating element. The processor and the transceiver may be components independent of each other, or may be an integrated component. This is not specifically limited in this embodiment of the present invention. A distance between each of the at least two remote antennas and the access point device body may be at least 2.5 meters. For example, the distance may be 3 meters or longer.

The omnidirectional antenna 403 has 360-degree uniform signal transmit strengths in a horizontal direction, and has larger signal coverage than the low side-lobe antenna. For example, a broadcast frame may be used for sending for all users in a wide range. The transceiver 401 is configured to use the omnidirectional antenna 403 only to receive data. The processor 402 is configured to select at least one target antenna from the at least one remote antenna 404. The transceiver 401 is further configured to use the at least one target antenna for communication.

Different quantities of radiating elements may be installed in at least two remote antennas based on factors such as quantities of terminals, network use statuses, and data transmission speeds in different regions. In a possible implementation, all of the at least one remote antenna 404 and the omnidirectional antenna 403 include a same quantity of radiating elements.

Different quantities of radiating elements may be installed in the omnidirectional antenna and the at least two remote antennas based on factors such as quantities of terminals, network use statuses, and data transmission speeds in different regions. In another possible implementation, at least two of the at least one remote antenna 404 and the omnidirectional antenna 403 include different quantities of radiating elements. For example, a quantity of radiating elements included in the omnidirectional antenna 403 may be set to be greater than a quantity of radiating elements included in the remote antenna. Because signal coverage of the omnidirectional antenna 403 is greater than signal coverage of the remote antenna, in many cases, there are more terminals in the signal coverage of the omnidirectional antenna 403. Therefore, disposing more radiating elements can shorten a network waiting time of the terminals in the signal coverage of the omnidirectional antenna 403.

When the processor 402 selects one target antenna or the omnidirectional antenna for communication, the access point device may perform communication in an SU-MIMO manner. In another possible implementation, when the processor 402 selects one target antenna, the access point device may perform communication in an MU-MIMO manner. In another possible implementation, when the processor 402 selects at least two target antennas for communication, the access point device may perform communication in an MU-MIMO manner.

In this embodiment, the processor 402 may determine a location of a terminal based on a data transmission request, and choose to use a target antenna closest to the terminal for data sending. As the location of the terminal requesting data transmission changes or a terminal in another location emerges, the processor 402 selects a different remote antenna for data sending.

An access point device of the structure shown in FIG. 1 may perform communication by using the following communication method: The access point device selects at least one target antenna from a plurality of remote antennas of the access point device, where there is a preset distance between each of the plurality of remote antennas and an access point device body of the access point device, and each remote antenna is a narrow beam low side-lobe antenna. The access point device uses the at least one target antenna for communication.

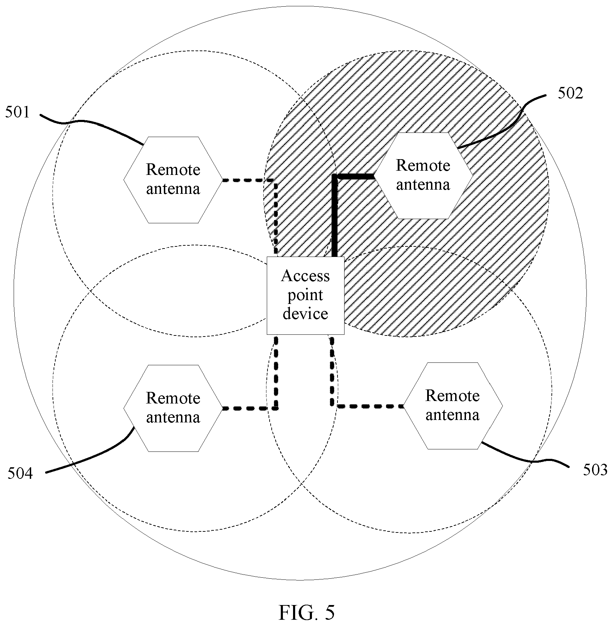

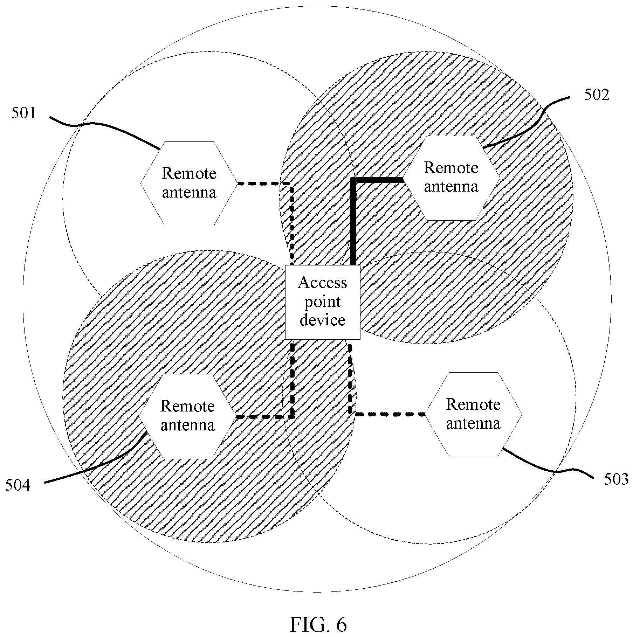

To help understand an antenna selection combination when the access point device works in this disclosure, the access point device of the structure shown in FIG. 1 is described below by using a working process of an access point device having four remote antennas (denoted as 401 to 404 in FIG. 5 and FIG. 6) as an example.

In another possible implementation, when a terminal sends a request to the access point device to perform communication, the processor calculates an RSSI and a PER based on the received request, and selects a remote antenna 502 as a target antenna. The processor selects an SU-MIMO manner or an MU-MIMO manner for communication based on a specific quantity of terminals. Coverage of the access point device is shown in a shadow part in FIG. 5. In this case, only the remote antenna 502 is used for communication, and the other three remote antennas are not used for communication. In another possible implementation, when a terminal sends a request to the access point device to perform communication, the processor calculates an RSSI and a PER based on the received request, and selects remote antennas 502 and 504 as target antennas. The processor selects an MU-MIMO manner for communication. Coverage of the access point device is shown in shadow parts in FIG. 6. In this case, only the remote antennas 502 and 504 are used for communication, and the other two remote antennas are not used for communication.

Only a process of using one remote antenna for communication and a process of using two remote antennas for communication are provided in the foregoing process. In an actual scenario, there may be a process of using three or four remote antennas for communication. This is not specifically limited in this embodiment of the present invention. In addition, in the foregoing process, when any remote antenna is selected for communication, a radiating element of the remote antenna may be further selected for communication, to obtain best communication quality with lowest energy consumption.

An access point device of the structure shown in FIG. 4 may perform communication by using the following communication method: The access point device uses an omnidirectional antenna of the access point device only to receive data, where an access point device body of the access point device includes the omnidirectional antenna, the access point device further includes a plurality of remote antennas that are connected to the access point device body by using radio frequency feed lines, a distance between each remote antenna and the access point device body is greater than a preset distance, and the at least one remote antenna is a narrow beam low side-lobe antenna. The access point device selects at least one target antenna from the at least one remote antenna, and uses the at least one target antenna for communication.

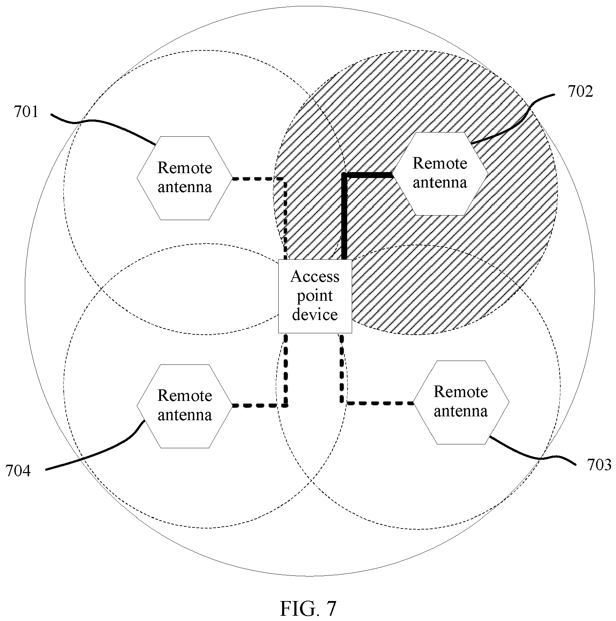

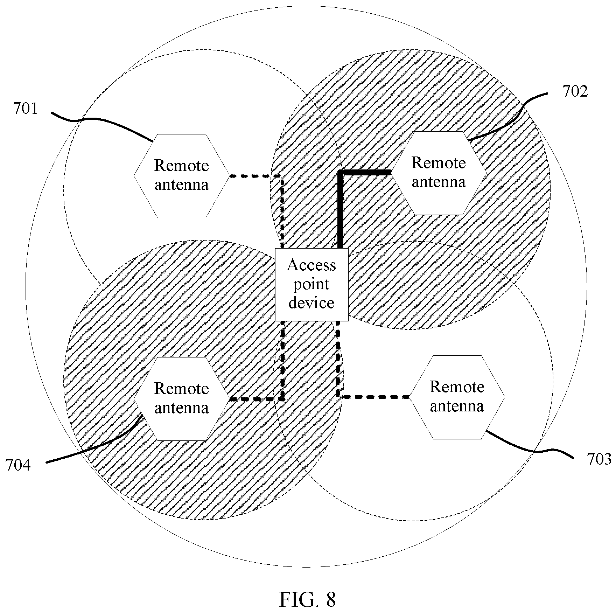

To help understand an antenna selection combination when the access point device works in this disclosure, the access point device of the structure shown in FIG. 1 is described below by using a working process of an access point device having four remote antennas (denoted as 701 to 704 in FIG. 7 and FIG. 8) and one omnidirectional antenna as an example.

In a possible implementation, when the access point device needs to send data to a terminal, the access point device may select a remote antenna 702 as a target antenna. A process of selecting a remote antenna may be: selecting, based on a location of the terminal to which the data is to be sent, a remote antenna closest to the terminal. In this case, coverage of the access point device is shown in a shadow part in FIG. 7. In this case, only the remote antenna 702 is used for communication, and the other three remote antennas and the omnidirectional antenna are not used for communication. In another possible implementation, when the access point device needs to send data to a terminal, the access point device may select remote antennas 702 and 704 as target antennas. A process of selecting remote antennas may be: selecting, based on a location of the terminal to which the data is to be sent, remote antennas closest to the terminal. In this case, coverage of the access point device is shown in shadow parts in FIG. 8. In this case, only the remote antennas 702 and 704 are used for communication, and the other two remote antennas and the omnidirectional antenna are not used for communication. Only a process of using one remote antenna for communication and a process of using two remote antennas for communication are provided in the foregoing process. In an actual scenario, there may be a process of using three or four remote antennas for communication. This is not specifically limited in this embodiment of the present invention. In addition, in the foregoing process, when any remote antenna is selected for communication, some or all radiating elements of the remote antenna may be further selected for communication, to obtain best communication quality with lowest energy consumption.

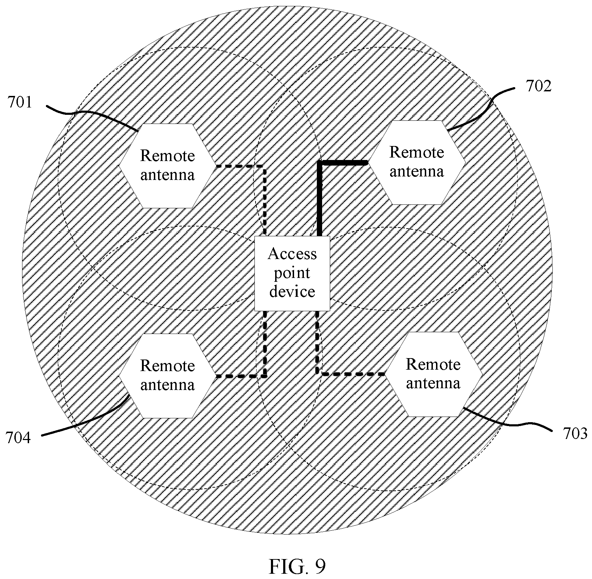

In another possible implementation, when a terminal sends a request to the access point device to send data, the access point device selects the omnidirectional antenna to receive the data. Because the access point device cannot determine which remote antenna covers the terminal that performs uplink sending, the access point device may perform receiving by using the omnidirectional antenna. In this case, coverage of the access point is shown in a shadow part in FIG. 9. This manner is applicable to a manner in which terminals randomly perform uplink transmission through channel contention. The access point device in FIG. 1 and the access point device FIG. 4 each use the remote antenna, and the remote antenna is closer to a terminal than the omnidirectional antenna. Therefore, a transmit power can be reduced, and co-channel interference can also be reduced. In addition, because a beam of the remote antenna is relatively narrow (for example, 60 degrees to 90 degrees), a lower side lobe can be achieved. Therefore, when data is sent to a terminal, interference to another co-channel device can be greatly reduced, and when data sent by the terminal is received, interference from another co-channel device can be avoided to a greater extent.

The access point devices provided in the foregoing embodiments are mainly applied to data transmission in a WLAN, and may be further applied to another mobile network, for example, a long term evolution (English: Long Term Evolution, LTE) network, a universal mobile telecommunications system (English: Universal Mobile Telecommunications System, UMTS) network, or a global system for mobile communications (English: Global System for Mobile Communications, GSM) network. In any one of the foregoing mobile networks, the access point devices each may be provided as a base station in the mobile network, and the remote antenna of the access point device may be provided as an antenna used for data sending/receiving, for example, a remote antenna unit of the base station. This is not specifically limited in this embodiment of the present invention.

All the foregoing optional technical solutions may be combined into an optional embodiment of this disclosure in any manner, and details are not described herein.

The foregoing descriptions are merely specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

## Claims

1. An access point device, wherein the access point device comprises an access point device body and a plurality of remote antennas located outside the access point device body, a distance between each remote antenna and the access point device body is greater than a preset distance, the access point device body comprises a transceiver and a processor, the processor is connected to the transceiver, the transceiver is connected to the plurality of remote antennas by using radio frequency feed lines, and the plurality of remote antennas are narrow beam low side-lobe antennas;
the processor is configured to select at least one target antenna from the plurality of remote antennas; and
the transceiver is configured to use the at least one target antenna for communication.

2. The access point device according to claim 1, wherein the preset distance is at least 2.5 meters.

3. The access point device according to claim 1 or 2, wherein all of the plurality of remote antennas comprise a same quantity of radiating elements.

4. The access point device according to claim 1 or 2, wherein at least two of the plurality of remote antennas comprise different quantities of radiating elements.

5. The access point device according to any one of claims 1 to 5, wherein the transceiver is configured to use at least two target antennas to perform communication in a multi-user multiple-input multiple-output (MU-MIMO) manner.

6. An access point device, wherein the access point device comprises an access point device body and at least one remote antenna located outside the access point device body, the access point device body comprises an omnidirectional antenna, a transceiver, and a processor, the processor is connected to the transceiver, the transceiver is connected to the omnidirectional antenna and the at least one remote antenna by using radio frequency feed lines, a distance between each remote antenna and the access point device body is greater than a preset distance, and the at least one remote antenna is a narrow beam low side-lobe antenna;
the transceiver is configured to use the omnidirectional antenna only to receive data;
the processor is configured to select at least one target antenna from the at least one remote antenna; and
the transceiver is further configured to use the at least one target antenna for communication.

7. The access point device according to claim 6, wherein all of the omnidirectional antenna and the at least one remote antenna comprise a same quantity of radiating elements.

8. The access point device according to claim 6, wherein at least two of the at least one remote antenna and the omnidirectional antenna comprise different quantities of radiating elements.

9. A communication method, wherein the method comprises:
selecting, by an access point device, at least one target antenna from at least two remote antennas of the access point device, wherein there is a preset distance between each of the at least two remote antennas and an access point device body of the access point device, and each remote antenna is a narrow beam low side-lobe antenna; and
using, by the access point device, the at least one target antenna for communication.

10. The method according to claim 9, wherein the using, by the access point device, the at least one target antenna for communication comprises:
using, by the access point device, at least two target antennas to perform communication in a multi-user multiple-input multiple-output (MU-MIMO) manner.

11. A communication method, wherein the method comprises:
using, by an access point device, an omnidirectional antenna of the access point device only to receive data, wherein an access point device body of the access point device comprises the omnidirectional antenna, the access point device further comprises a plurality of remote antennas that are connected to the access point device body by using radio frequency feed lines, a distance between each remote antenna and the access point device body is greater than a preset distance, and the at least one remote antenna is a narrow beam low side-lobe antenna; and
selecting, by the access point device, at least one target antenna from the at least one remote antenna, and using the at least one target antenna for communication.
